# FASCICULE DE BREVET EUROPEEN

(11) **EP 0 706 936 B1**
(45) Date de publication et mention de la délivrance du brevet: **07.01.1999**
(21) Numéro de dépôt: 95402239.8
(22) Date de dépôt: 06.10.1995
(51) Int. Cl.: B64C 27/48, B64C 27/58, B64C 27/51

(54) **Perfectionnements aux dispositifs de commande de pas pour rotors sans articulation**
Verbesserungen zu Blattverstell-Steuervorrichtungen für gelenklose Rotoren
Improvements to pitch control devices for hingeless rotors

(30) Priorité: 11.10.1994 FR 9412115
(43) Date de publication de la demande: 17.04.1996
(73) Titulaire: EUROCOPTER, F-13725 Marignane Cédex (FR)
(72) Inventeur: Legendre, Philippe, Maurice, René, F-13450 Grans (FR); Manfredotti, Thomas, Pierre, F-13510 Eguilles (FR); Herpin, Gilles, Daniel, F-13127 Vitrolles (FR)
(74) Mandataire: Bérogin, Francis

(56) Documents cités:
- EP-A- 0 048 799
- EP-A- 0 085 128
- US-A- 4 297 080

## Description

L'invention concerne les dispositifs pour commander le pas, collectif et cyclique, des pales d'un rotor principal (sustentateur) ou anti-couple (arrière) du type dit "sans articulation", pour un aéronef à voilure tournante tel qu'un hélicoptère.

L'invention a plus précisément pour objet des perfectionnements apportés au dispositif de commande de pas pour rotor sans articulation tel que décrit dans US-A-4,297,080, et du type dans lequel :
- un mât rotor est entraîné en rotation autour d'un axe du rotor,
- un moyeu est solidaire en rotation du mât,
- au moins deux pales sont chacune, d'une part, reliée au moyeu par une partie d'emplanture comprenant au moins un bras torsible autour d'un axe longitudinal de changement de pas de la pale, et, d'autre part, munie d'une manchette rigide en torsion, entourant le bras torsible, et dont la partie radiale externe, par rapport à l'axe du rotor, est solidaire en torsion de la pale et du bras torsible autour de l'axe de pas, tandis que sa partie radiale interne entoure sans contact le bras torsible et présente deux leviers de pas fixés l'un sur le bord d'attaque et l'autre sur le bord de fuite de la manchette, chaque levier de pas étant articulé à une extrémité de l'une respectivement de deux biellettes intermédiaires dont les autres extrémités sont articulées à un levier de renvoi, de part et d'autre d'une liaison pivotante du levier de renvoi sur un pivot solidaire en rotation du mât rotor, le levier de renvoi étant relié par une articulation décalée par rapport à sa liaison pivotante, à une bielle de commande de pas correspondante manoeuvrée sensiblement dans la direction de l'axe A-A du rotor par un mécanisme d'actionnement relié aux commandes de vol actionnées par le pilote.

Chaque pale peut être individuellement reliée au moyeu, par sa partie d'emplanture raccordée à ou aux longeron(s) de la pale, ou constituant un prolongement radial interne de ce ou ces longerons, comme décrit dans US-A-4,690,616, concernant un rotor principal sans articulation.

Mais la partie d'emplanture de chaque pale peut aussi être une portion d'une lame commune à deux pales opposées, dont cette lame constitue ou prolonge les longerons, comme décrit à titre d'exemple dans US-A-4,297,080 pour un rotor principal et dans FR-A-2 285 298, pour un rotor anti-couple d'hélicoptère. Dans un tel rotor, la lame, formant les longerons flexibles de deux pales opposées et dont chacun est entouré d'une coque profilée pour former la pale correspondante, est encastrée par sa partie médiane entre deux plateaux de moyeu fixés sur un arbre rotor, et la commande du pas des pales est obtenue par la torsion de la lame sur une fraction de sa longueur, à l'emplanture de chaque pale au moyeu.

Dans le cas d'un rotor principal, le mécanisme d'actionnement de la bielle de commande de pas est en général un mécanisme à plateaux cycliques, comportant un plateau tournant entraîné en rotation avec le rotor, par exemple à l'aide d'au moins un compas articulé, d'une part, sur le plateau tournant, et, d'autre part, sur le moyeu ou sur le mât rotor, la bielle de commande de pas de chaque pale étant articulée sur ce plateau tournant, monté en rotation sur un plateau non tournant, sollicité par des actionneurs, tels que des vérins de servo-commande, le reliant à une structure non tournante de l'hélicoptère, et le mécanisme à plateaux cycliques comprenant également des moyens de guidage en translation des deux plateaux, parallèlement à l'axe du rotor, et des moyens de guidage d'inclinaison des deux plateaux sur l'axe du rotor.

Ces moyens de guidage en translation et en inclinaison peuvent être réalisés selon deux variantes connues, et comporter des moyens formant rotule, pour guider l'inclinaison des deux plateaux sur l'axe du rotor, et soit un coulisseau, coulissant axialement autour d'un manchon non tournant entourant le mât rotor, comme décrit dans FR-A-2 119 828, soit des colonnettes, parallèles à l'axe du rotor, et disposées autour du mât rotor, comme décrit dans DE-A-36 03 400, pour constituer les moyens de guidage en translation des deux plateaux.

Pour un rotor anti-couple, le mécanisme d'actionnement de la bielle de commande de pas peut être un mécanisme à plateau araignée, comportant autant de bras que le rotor comporte de pales, ce plateau araignée étant commandé en translation coaxialement au mât rotor, dont il est solidaire en rotation, et chaque bras du plateau araignée étant relié au levier de pas de la pale correspondante par l'intermédiaire de la bielle de commande de pas, de manière à assurer la commande collective du pas des pales par la commande de la position axiale du plateau araignée par rapport au mât rotor. Un tel mécanisme d'actionnement pour la commande collective du pas des pales du rotor arrière est par exemple décrit dans US-A-3,594,097 et US-A-4,626,173.

Dans le rotor sans articulation du type décrit dans US-A-4,297,080, chaque manchette rigide en torsion transmet la commande du pas de la pale correspondante entre les leviers de pas, sollicités depuis la bielle de commande de pas correspondante par l'intermédiaire d'un parallélogramme déformable, et la pale, sans introduction d'efforts supplémentaires dans le bras torsible. En effet, les déplacements appliqués sur les deux leviers de pas du dispositif de commande par traction ou compression dans la bielle de commande de pas correspondent à une traction dans l'une des biellettes intermédiaires et une compression dans l'autre, de sorte que les deux leviers de pas sont sollicités de manière antagoniste et de façon à introduire un couple pur dans la manchette transmettant le pas à la pale sans appui sur le bras torsible. Il en résulte une meilleure tenue mécanique, grâce au partage des efforts dans les deux biellettes intermédiaires. Mais aucune disposition n'est prévue pour l'amortissement des pales en traînée, alors que cet amortissement est nécessaire, en particulier sur les rotors principaux, notamment pour lutter contre les phénomènes connus dits de "résonance-sol" et de "résonance de chaîne cinématique", en combinaison avec des raideurs en traînée déterminées.

Sur un tel rotor sans articulation, le montage classique d'amortisseurs de traînée entre les manchettes et le moyeu ou entre des manchettes voisines n'est pas approprié, car il n'est pas insensible aux mouvements de pas et de battement, et il en résulte des couplages pas-traînée et battement-traînée.

Le but de l'invention est de proposer un dispositif de commande de pas pour rotor sans articulation du type connu par US-A-4,297,080 et qui convienne mieux que celui connu aux diverses exigences de la pratique, et en particulier grâce auquel la commande de pas, obtenue par l'introduction de couples purs dans les manchettes rigides en torsion, à la place de moments et d'efforts tranchants, est assurée avec une adaptation dynamique en traînée évitant les couplages battements-traînée et pas-traînée, grâce à au moins un amortisseur de traînée judicieusement monté pour n'être sollicité que par les mouvements de traînée en restant insensible aux mouvements de pas et battement.

Un autre but de l'invention est de proposer un dispositif de commande de pas pour rotor sans articulation qui soit fiable, durable, économique, tant à la fabrication qu'au montage, et d'une maintenance facilitée.

A cet effet, le dispositif de commande de pas selon l'invention, du type connu par US-A-4,297,080 et tel que défini ci-dessus, se caractérise en ce que, pour chaque pale, une traverse est disposée entre les deux biellettes intermédiaires et articulée sur chacune desdites biellettes entre les extrémités de chaque biellette, et ladite traverse coopère avec un ensemble comportant au moins un amortisseur de traînée de la pale correspondante, ledit ensemble étant articulé sur un point fixe solidaire en rotation du mât rotor. Ce point fixe en repère tournant sert d'appui au(x) amortisseur(s) de traînée qui, grâce à la traverse articulée sur les deux biellettes intermédiaires, comme le levier de renvoi, n'est (ou ne sont) sollicité(s) que par des mouvements de traînée de la pale correspondante, en particulier si, avantageusement, les distances séparant les centres des articulations de chaque biellette intermédiaire sur le levier de pas correspondant et sur la traverse sont égales.

De plus, une meilleure adaptation dynamique en traînée peut être assurée si, avantageusement, l'amortisseur de traînée, ou l'un d'eux au moins, pour chaque pale, est associé à des moyens élastiques de rappel dans ledit ensemble constituant un adaptateur de fréquence, monté entre la manchette correspondante et le moyeu par l'intermédiaire des biellettes intermédiaires et du mât rotor.

Le dispositif de l'invention reste compatible avec les mécanismes connus d'actionnement des bielles de commande de pas, de sorte que pour un rotor principal, ce mécanisme d'actionnement de la bielle de commande de pas peut être un mécanisme à plateaux cycliques, tandis que pour un rotor anti-couple, ce mécanisme d'actionnement peut être un mécanisme à plateau araignée, tel que défini ci-dessus.

En outre, pour assurer avantageusement l'amortissement en traînée des pales du rotor, selon un premier mode de réalisation, le dispositif est tel que, pour chaque pale, la traverse est articulée par son milieu sur ledit ensemble avec amortisseur de traînée, lequel ensemble est articulé par ailleurs sur ledit point fixe, solidaire en rotation du mât rotor. Dans une variante, cet amortisseur de traînée peut être double, à deux étages symétriques par rapport à un point milieu, correspondant au milieu de la traverse à laquelle l'ensemble avec amortisseur est intégré, et ce point milieu est aménagé en articulation centrale par laquelle ledit ensemble est articulé sur ledit point fixe, solidaire en rotation du mât rotor. L'amortisseur peut ainsi être installé parallèlement au levier de renvoi et muni d'une articulation centrale située avantageusement sur un axe parallèle à l'axe rotor et passant par le centre de la liaison pivotante du levier de renvoi sur son pivot.

De manière générale, pour chaque pale, les centres de la liaison pivotante du levier de renvoi sur son pivot et de l'articulation de la traverse sur l'ensemble amortisseur de traînée ou de l'articulation centrale de l'ensemble amortisseur de traînée double sur le point fixe lié au mât rotor, selon les modes de réalisation, sont sensiblement dans un même plan radial, par rapport à l'axe du rotor, passant par l'axe de pas de la pale correspondante, pour éliminer les efforts dissymétriques et les couplages pas-traînée.

Dans un mode de réalisation avantageusement simple à réaliser, monter et entretenir, pour chaque pale, le pivot est relié rigidement au mât rotor par au moins une potence latérale, la bielle de commande de pas est articulée sur une extrémité du levier de renvoi sensiblement rectiligne, et les deux leviers de pas sont en saillie l'un vers l'avant et l'autre vers l'arrière de la manchette correspondante et sensiblement de même longueur, ainsi que les deux biellettes intermédiaires, sensiblement rectilignes.

D'autres avantages et caractéristiques de l'invention découleront de la description donnée ci-dessous, à titre non limitatif, d'exemples de réalisation décrits en référence aux dessins annexés sur lesquels :
- la figure 1 est une vue schématique en partie en perspective et en partie en coupe d'un dispositif de commande de pas connu par US-A-4,297,080 et équipant un rotor arrière,
- la figure 2 est une vue en élévation latérale d'un rotor principal d'hélicoptère équipé du dispositif de commande de pas selon l'invention limité, dans un but de simplicité, aux composants nécessaires pour une seule pale du rotor, et
- la figure 3 est une vue schématique en élévation latérale d'une variante de rotor selon la figure 2, dont l'amortisseur de traînée est double.

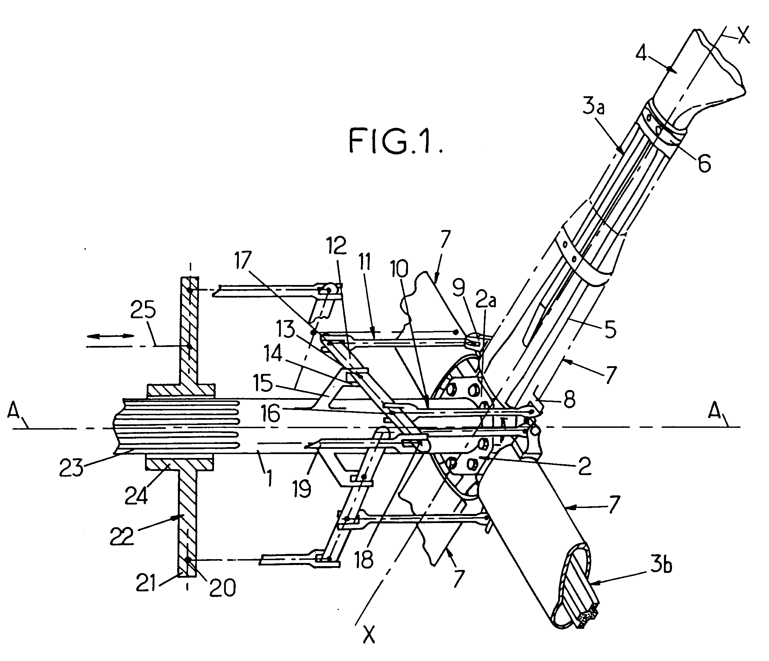

Le rotor arrière quadripale pour hélicoptère de la figure 1 comprend un arbre ou mât rotor 1 entraîné par sa base (non représentée sur la gauche du dessin) en rotation autour de l'axe A-A du rotor, et solidaire en rotation, à son extrémité opposée, d'un moyeu 2. Ce moyeu 2 comprend deux plateaux de moyeu tels que 2a, superposés et boulonnés l'un vers l'autre en enserrant entre eux les parties centrales qui se croisent de deux lames composites torsibles et flexibles 3a et 3b, constituant chacune, de part et d'autre de sa partie centrale encastrée dans le moyeu 2, le longeron de l'une des quatre pales 4 opposées deux à deux, par sa partie et son extrémité radiale externe par rapport à l'axe A-A, ainsi que la partie d'emplanture 5 de cette même pale 4, par la partie de lame 3a s'étendant entre le pied 6 de la pale 4 et le moyeu 2, en traversant une manchette 7 rigide en torsion, métallique ou en matériau composite. Dans ce rotor arrière sans articulation, chaque pale 4 est reliée au moyeu 2 par la partie d'emplanture 5 constituée du bras torsible autour de l'axe longitudinal X-X de changement de pas de la pale 4 et formé par la partie de lame 3a (ou 3b) s'étendant entre le pied de pale 6 et le moyeu 2. A son extrémité radiale externe (par rapport à l'axe du rotor A-A), la manchette 7 est solidaire en torsion, autour de l'axe de pas X-X, du pied de pale 6, de la pale 4 ainsi que du bras torsible 5 qu'elle entoure. Par contre, la partie radiale interne de la manchette 7 entoure sans contact la partie du bras torsible 5 qui est voisine du moyeu 2.

Un tel rotor arrière sans articulation fonctionne de la façon suivante : les oscillations de chaque pale 6 en battement s'effectuent par flexion du bras 5 torsible et flexible autour d'un axe fictif de battement s'étendant sensiblement dans le plan de rotation des pales 4 et perpendiculaire à l'axe de pas X-X de la pale 4 considérée, dans la partie du bras 5 voisine du moyeu 2 ; les oscillations en traînée de chaque pale 4 s'effectuent par flexion du bras 5 correspondant autour d'un axe de traînée qui est parallèle à l'axe A-A du rotor et coupe l'axe X-X de pas de la pale 4 considérée dans la partie du bras 5 voisine du moyeu 2 ; les mouvements de chaque pale 4 en pas sont permis par une torsion du bras 5 autour de l'axe de pas X-X, le changement du pas de la pale 4 étant commandé, selon les enseignements de US-A-4,297,080, grâce à deux leviers de pas 8 et 9, fixés du côté respectivement du bord de fuite et du bord d'attaque de la pale 4 sur la partie d'extrémité radiale interne de la manchette rigide 7, et à l'extrémité libre de chacun desquels est articulée, par un embout à rotule, une extrémité de l'une respectivement de deux biellettes intermédiaires articulées par leur autre extrémité sur un levier de renvoi pivotant sur un point fixe du mât ou du moyeu et lui-même articulé à une bielle de commande de pas à son tour articulée à un bras sensiblement radial d'un plateau de commande, dit plateau araignée, comportant autant de bras que le rotor arrière comporte de pales, ce plateau de commande étant entraîné en rotation avec l'arbre 1 du rotor mais monté coulissant axialement sur ce dernier et commandé en position axiale par un arbre ou une tige de commande.

Dans le dispositif de commande de pas de l'invention, les leviers de pas 8 et 9 s'étendent en saillie respectivement vers l'arrière du bord de fuite et vers l'avant du bord d'attaque de la manchette 7, par rapport au sens de rotation du rotor, sur l'extrémité radiale interne de la manchette 7, de sorte que les deux leviers de pas 8 et 9 s'étendent dans le prolongement l'un de l'autre, dans des sens opposés sur des parties directement opposées de la manchette 7 par rapport à l'axe X-X. Chacun des deux leviers de pas 8 et 9 est articulé sur un embout à rotule d'une extrémité de l'une respectivement de deux biellettes intermédiaires 10 et 11 rectilignes identiques, s'étendant sensiblement parallèlement à l'axe du rotor A-A. Les autres extrémités des biellettes 10 et 11 sont articulées, également par des rotules, sur un même levier de renvoi rectilignes 12, symétriquement de part et d'autre d'une articulation 13 à rotule de ce levier 12 dans une chape de pivotement 14 qui est solidaire en rotation de l'arbre rotor 1 par un bras de console 15 latéralement en porte-à-faux sur l'arbre rotor 1. Par une extrémité située à l'extérieur du segment défini par les articulations 16 et 17 des biellettes intermédiaires 10 et 11 sur le levier de renvoi 12, ce dernier est articulé par une liaison à rotule 18 dans une chape d'extrémité d'une bielle 19 de commande de pas ou principale, dont l'autre extrémité est également articulée par une liaison à rotule telle que 20 sur l'un des quatre bras radiaux tels que 21 d'un plateau de commande 22. Ce dernier est entraîné en rotation avec l'arbre rotor 1 par des cannelures axiales 23 complémentaires et en prise les unes avec les autres sur l'arbre 1 et dans le moyeu 24 du plateau 22, lequel est également ainsi monté axialement coulissant le long de l'arbre rotor 1. Les translations axiales du plateau de commande 22 sont commandées par un arbre de commande schématisé en 25, de sorte que la bielle principale 19 de chaque pale 4 est manoeuvrée sensiblement dans la direction de l'axe A-A du rotor par le mécanisme d'actionnement constitué du plateau de commande 22 et de l'arbre de commande 25 relié aux commandes de vols actionnées par le pilote. Ces déplacements sensiblement axiaux d'une bielle principale 19 provoquent le pivotement du levier de renvoi 12 correspondant autour de sa liaison pivotante 13 sur la chape 14, de sorte que l'une des deux biellettes intermédiaires 10 et 11 est sollicitée sensiblement axialement dans un sens et l'autre dans l'autre sens, ce qui a pour effet de faire tourner les leviers de commande de pas 8 et 9 dans le même sens autour de l'axe de pas X-X de la pale 4 correspondante, et donc d'introduire un couple de rotation pur sur la manchette 7 qui entraîne ainsi la variation du pas de la pale 4 sans introduction de moments ou d'efforts tranchants par la manchette 7.

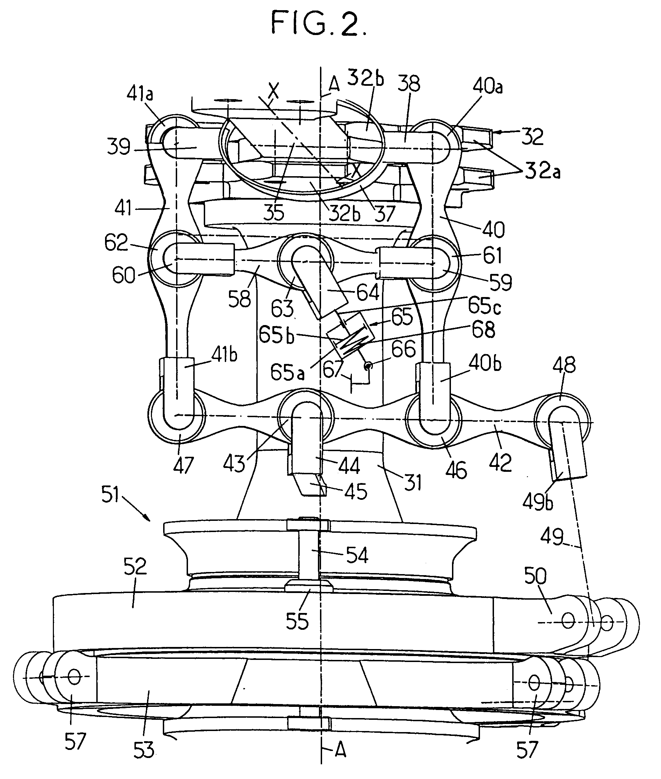

La figure 2 représente partiellement un premier exemple de rotor principal quadripale d'hélicoptère pour lequel, dans un but de simplification et de clarté, on s'est contenté de représenter la partie d'emplanture d'une seule pale, la manchette correspondante limitée à sa partie tubulaire d'extrémité radiale interne qui supporte les leviers de pas, et les composants du dispositif de commande de pas nécessaires à la commande de cette seule pale ainsi qu'un amortisseur de traînée correspondant.

Ce rotor comprend un mât rotor 31 entraîné en rotation par sa base autour de l'axe A-A du rotor, et dont l'extrémité supérieure est solidaire en rotation d'un moyeu 32 à deux plateaux 32a disposés l'un au-dessus de l'autre et présentant chacun et pour chaque pale l'un de deux bras radiaux 32b, disposés l'un au-dessus de l'autre, et formant une chape d'encastrement sur le moyeu 32 de l'extrémité radiale interne (par rapport à l'axe rotor A-A) d'un bras torsible et flexible 35 constituant la partie d'emplanture d'une pale (non représentée). A cet effet, chacun des deux bras 32b d'une chape est percé de manière connue de deux alésages en regard avec les deux alésages correspondants de l'autre bras pour le passage de broches de fixation traversant des alésages correspondants dans la partie radiale interne du bras 35 de façon à le retenir encastré entre les deux plateaux 32a du moyeu 32 par sa partie radiale interne. Comme dans l'exemple précédent, le bras 35 est entouré d'une manchette rigide en torsion 37, solidaire en torsion, par son extrémité radiale externe, du pied de la pale (non représenté) ainsi que de l'extrémité radiale externe du bras torsible 35 par des moyens connus (non représentés) pouvant comprendre une chape à deux éléments boulonnés l'un vers l'autre en enserrant entre eux les extrémités radiales externes du bras 35 et de la manchette 37, et entre lesquels le pied de la pale est retenu, d'une manière bien connue, par exemple par deux broches dont l'une est éventuellement amovible pour permettre un "repliage" de la pale par pivotement autour de l'autre broche dans cette chape de retenue à sa partie d'emplanture (bras 35) sur le moyeu 32.

A son extrémité radiale interne, la manchette 37, qui entoure sans contact le bras torsible 35, porte deux leviers de pas 38 et 39 en saillie l'un du côté du bord d'attaque et l'autre du côté du bord de fuite de la pale correspondante.

Les deux leviers de pas 38 et 39 sont identiques, symétriques par rapport à l'axe X-X longitudinal du bras torsible 35, qui est également l'axe de changement de pas de la pale correspondante, et chacun des deux leviers de pas 38 et 39 est conformé en chape à deux branches parallèles qui sont symétriques l'une de l'autre par rapport à un plan parallèle à l'axe rotor A-A et perpendiculaire à l'axe de pas X-X de la pale, et contenant les axes virtuels ou fictifs de battement et de traînée de cette pale, et autour desquels le bras 35 se déforme en flexion. Dans la chape de chaque levier de pas 38 ou 39 est retenue une rotule d'articulation 40a ou 41a montée dans l'extrémité supérieure, aménagée en embout à rotule, de l'une respectivement de deux biellettes intermédiaires identiques 40 et 41 d'axes longitudinaux parallèles à l'axe A-A du rotor. L'extrémité inférieure de chacune des biellettes 40 et 41 est aménagée en chape 40b ou 41b à deux branches parallèles entre elles et sensiblement aux branches des chapes des leviers de pas 38 et 39, et dans chacune des chapes 40b et 41b est retenue une rotule d'articulation 46 ou 47 montée dans un levier de renvoi 42. Ce levier de renvoi 42 présente, entre la rotule 46 et la rotule 47, laquelle est voisine d'une extrémité du levier de renvoi 42, une troisième rotule d'articulation 43 retenue dans une chape 44 de pivotement du levier 42, cette chape 44 étant fixée en porte-à-faux par rapport au mât rotor 31 par une console latérale 45 qui est solidaire par une extrémité de la chape 44 et par l'autre extrémité du mât rotor 31. Sur le renvoi 42, les rotules d'articulation 46 et 47 sont montées symétriquement l'une de l'autre par rapport à la rotule 43 de la liaison pivotante du renvoi 42 sur la chape 44 solidaire en rotation du mât rotor 31. A son extrémité opposée à celle équipée de la rotule 47, et donc à l'extérieur du segment délimité sur le renvoi 42 par les rotules 46 et 47, le renvoi 42 est équipé d'une quatrième rotule d'articulation 48 retenue dans une chape 49b à l'extrémité supérieure d'une bielle 49 principale ou de commande de pas de la pale correspondante, individuellement reliée au moyeu 32 par le bras torsible 35 correspondant. L'extrémité inférieure de la bielle de commande de pas 49 est aménagée en embout à rotule (non représenté) articulée dans une chape 50 à deux branches radiales en saillie vers l'extérieur sur le plateau tournant 52 d'un dispositif à plateaux cycliques 51, de structure bien connue, comprenant également un plateau non tournant 53, sur lequel le plateau tournant 52 est monté coaxialement en rotation par au moins un roulement à billes. De manière bien connue, les deux plateaux 52 et 53 sont guidés en translation parallèlement à l'axe A-A par deux colonnettes 54, d'axe parallèle à l'axe rotor A-A, et le long desquelles glisse le coulisseau 55 auquel le plateau non tournant 53 est relié de manière connue par une rotule non visible sur la figure 2 et guidant les inclinaisons des plateaux 52 et 53 autour de l'axe rotor A-A. De manière connue, le plateau non tournant 53 présente également trois chapes telles que 57 en saillie radiale vers l'extérieur, et par chacune desquelles il est articulé à l'extrémité supérieure de l'un respectivement de trois vérins de servocommande (non représentés) articulés par leur extrémité inférieure sur une partie non tournante de la structure de l'hélicoptère.

De manière connue, la commande du pas général est assurée en actionnant, à l'aide des vérins de servo-commande, les deux plateaux 52 et 53 en translation selon l'axe A-A, tandis que la commande du pas cyclique est assurée en commandant leur inclinaison sur cet axe A-A. Dans les deux cas, la bielle de commande de pas 49 exerce une poussée ou une traction sur l'extrémité du levier de renvoi 42 équipée de l'articulation à rotule 48. Le levier de renvoi 42 pivote ainsi autour de l'axe de retenue de sa rotule 43 dans la chape 44, ce qui provoque une poussée dans l'une des deux biellettes 40 et 41 et une traction dans l'autre. Les deux leviers de pas 38 et 39 sont ainsi sollicités l'un vers le haut et l'autre vers le bas, de sorte qu'un couple pur est introduit dans la manchette 37, qui transmet ce couple à la pale commandée en pas en déformant le bras 35 en torsion autour de l'axe X-X.

Comme dans l'exemple précédent, la manoeuvre de la bielle de commande de pas 49 ou 19, sensiblement dans la direction de l'axe A-A du rotor, par le mécanisme d'actionnement constitué du dispositif à plateaux cycliques 51 ou du dispositif à plateau de commande 22 de l'exemple précédent, est transformée, par l'articulation de cette bielle 49 ou 19 sur le levier de renvoi 42 ou 12 en un point décalé de la liaison pivotante 43 ou 13 de ce dernier sur un point fixe (44, 14) par rapport au mât rotor 1 ou 31, en deux sollicitations antagonistes des biellettes intermédiaires 40 et 41 ou 10 et 11, entraînant les deux leviers de pas 38 et 39 ou 8 et 9 en rotation dans le même sens autour de l'axe de pas X-X de la pale correspondante.

Dans les deux exemples également, les deux leviers de pas 8 et 9 ou 38 et 39 sont de même longueur, ainsi que les deux biellettes intermédiaires 10 et 11 ou 40 et 41, et sont des éléments essentiellement rectilignes. Les deux biellettes 10 et 11 ou 40 et 41 sont sollicitées par le levier de renvoi 12 ou 42 avec des bras de levier égaux par rapport à la liaison pivotante 13 ou 43 du levier de renvoi 12 ou 42 sur le pivot 14 ou 44 rigidement relié au mât rotor 1 ou 31. Ces bras de levier sont chacun supérieur à la moitié du bras de levier avec lequel la bielle de commande de pas 19 ou 49 sollicite le levier de renvoi 12 ou 42, par rapport à la liaison pivotante 13 ou 43 de ce dernier sur le pivot 14 ou 44. Cette mesure permet de réduire l'effort introduit par le levier de renvoi 12 ou 42 dans les biellettes 10 et 11 ou 40 et 41 par rapport à l'effort reçu de la bielle de commande 19 ou 49. En conséquence, les biellettes peuvent être réalisées moins lourdes et présenter une plus grande durée de vie. Simultanément, pour que la bielle de commande 19 ou 49 soit aussi peu chargée que possible, son articulation 18 ou 48 sur le levier de renvoi 12 ou 42 est, comme décrit, à l'extérieur du segment délimité sur le renvoi 12 ou 42 par les articulations 16 et 17 ou 46 et 47 des biellettes intermédiaires 10 et 11 ou 40 et 41.

En outre, les articulations telles que 40a et 41a des deux leviers de pas 38 et 39 ou 8 et 9 sur les biellettes intermédiaires 40 et 41 ou 10 et 11 sont centrées sur l'axe de battement, de sorte à obtenir un bon blocage en battement de la manchette 37 ou 7, tout en assurant une commande de pas de la pale sans couplage pas-battement.

De même, ces articulations sont centrées, au repos, dans le plan parallèle à l'axe du rotor A-A et perpendiculaire à l'axe de pas X-X de la pale qui contient l'axe fictif de traînée, de façon à réduire les couplages pas-traînée.

Enfin, ce dispositif de commande de pas est neutre vis-à-vis des déplacements parallèlement à l'axe X-X de la pale, sous l'effet de la force centrifuge.

La géométrie du dispositif a pour conséquence que les rotules des articulations des biellettes intermédiaires 10 et 11 ou 40 et 41 sont soumises à un effort inférieur à celles des articulations de la bielle de pas 19 ou 49, ce qui garantit leur tenue dans le temps. En outre, ces articulations à rotule sont aisément inspectables et démontables. Le coût de montage direct ainsi que le coût de la maintenance d'un tel dispositif sont très inférieurs à ceux des dispositifs connus avec palier d'appui lamifié.

Sur la figure 2, le levier de renvoi 42, de forme générale rectiligne et allongée, est aminci dans les trois zones situées entre ses quatre rotules d'articulation 43, 46, 47 et 48, ce qui a pour effet de l'alléger, sans perturber l'alignement des centres des rotules sur l'axe longitudinal de ce levier de renvoi 42.

La différence essentielle entre les réalisations des figures 1 et 2 est que le dispositif de la figure 2 comprend, en plus des composants de celui de la figure 1, et pour chaque pale du rotor, une traverse 58, s'étendant entre les deux biellettes intermédiaires 40 et 41, sur chacune desquelles la traverse 58 s'articule, entre les deux extrémités de la biellette 40 ou 41 correspondante, par l'une respectivement de deux chapes d'extrémité 59 et 60. Dans ces chapes 59 et 60 sont respectivement retenues les rotules 61 et 62 d'articulation montées respectivement dans les biellettes intermédiaires 40 et 41, lesquelles sont amincies de part et d'autre des rotules 61 et 62 pour diminuer leur masse, et de sorte que la distance entre les centres des rotules 61 et 40a d'articulation de la biellette 40 sur la traverse 58 et sur le levier de pas 38 soit égale à la distance entre les centres des rotules 62 et 41a d'articulation de la biellette 41 sur la traverse 58 et sur le levier de pas 39. En outre, la traverse 58 est équipée, dans son milieu, d'une rotule 63 d'articulation dans une chape 64 d'extrémité d'un ensemble à un seul amortisseur de traînée schématisé en 65, et articulé à son autre extrémité par un joint à rotule 66 sur un point fixe 67 rigidement lié au mât rotor 31, et donc solidaire en rotation de ce dernier. L'amortisseur 65 de traînée de la pale correspondante liée au bras torsible 35 est ainsi sollicité par les déformations en traînée du double parallélogramme déformable constitué par les deux biellettes 40 et 41, les deux leviers de pas 38 et 39 et la manchette 37, la traverse 58 et le levier de renvoi 42 articulé dans la chape de pivot 44 fixe en repère tournant. Le centre de la rotule 43 d'articulation du levier de renvoi 42 sur la chape de pivot 44 ainsi que le centre de la rotule 63 d'articulation du milieu de la traverse 58 sur une extrémité de l'ensemble à amortisseur de traînée 65 sont situés dans un même plan radial passant par l'axe du rotor A-A ainsi que par l'axe de pas X-X du bras torsible 35 et de la pale correspondante, de sorte que la commande du pas, d'une part, et l'amortissement de la traînée, d'autre part, peuvent être assurés simultanément et indépendamment l'un de l'autre, sans introduction de couplage pas-traînée. En outre, les centres des rotules 61 et 62 d'articulation de la traverse 58 sur les biellettes 40 et 41 sont, comme les centres des rotules 40a et 41a d'articulation de ces mêmes biellettes sur les leviers de pas 38 et 39, situés dans le plan parallèle à l'axe A-A et passant par l'axe fictif de battement, de sorte que le dispositif de commande de pas et d'amortissement en traînée ainsi obtenu est insensible aux battements de la pale correspondante.

Sur la figure 2, l'amortisseur de traînée 65 a été schématisé comme un amortisseur hydraulique à cylindre 65a rempli d'un fluide hydraulique et dans lequel coulisse un piston 65b solidaire d'une tige 65c, avec laminage du fluide hydraulique entre piston 65b et cylindre 65a et/ou par des orifices dans le piston 65b, la tige 65c portant la chape 64 à son extrémité externe au cylindre 65a pour être articulée à la traverse 58, tandis que le cylindre 65a est relié à l'extrémité opposée de l'amortisseur 65, à l'articulation 66 sur le point fixe 67 en repère tournant. Mais il est bien entendu possible que l'amortisseur 65 soit hydro-élastique ou hydro-visco-élastique, et/ou relié par sa tige 65c à l'articulation 66 et par son cylindre 65a à la chape 64 d'articulation en 63 sur la traverse 58, ou encore que l'amortisseur 65 soit visco-élastique, avec au moins une couche d'un matériau visco-élastique sollicité en cisaillement entre deux plaques rigides dont l'une est reliée à l'articulation 66 et l'autre, à la chape 64. L'amortisseur 65 peut présenter toute structure appropriée et connue d'amortisseur de traînée.

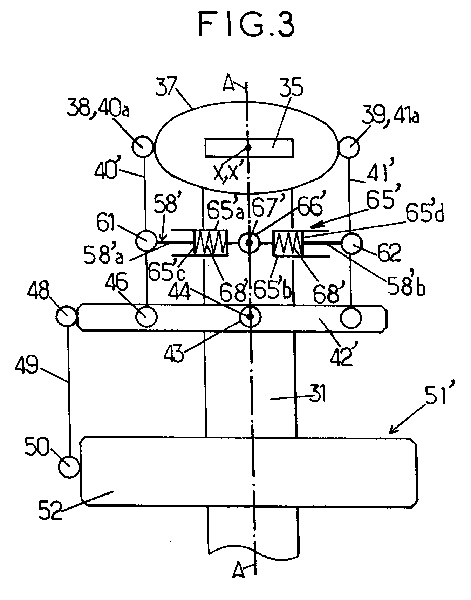

La figure 3 représente schématiquement une variante du rotor de la figure 2, sur laquelle les éléments identiques ou analogues à ceux de la figure 2 sont repérés par des références numériques identiques ou affectées d'un symbole prime.

La différence essentielle entre ces deux réalisations est que, sur le rotor de la figure 3, l'amortisseur de traînée 65' de l'ensemble à amortisseur est double, à deux étages symétriques l'un de l'autre et de part et d'autre d'un point milieu 66', qui correspond au milieu de la traverse 58' à laquelle l'amortisseur 65' est intégré.

Ce point milieu 66' est aménagé en articulation centrale, par laquelle l'amortisseur 65' est articulé autour d'un point fixe 67', solidaire en rotation du mât rotor 31 car rigidement lié à ce dernier par un bras latéral de potence (non visible sur la figure 3 en élévation latérale), tel que le centre de l'articulation centrale 66' est non seulement dans le plan radial passant par les axes A-A et X-X et par le centre de l'articulation 43 du levier 42' sur son pivot 44 mais également situé sur un axe parallèle à l'axe rotor A-A et passant par le centre de l'articulation 43 du levier de renvoi 42' sur le centre du pivot 44 lié au mât rotor 31.

L'amortisseur 65' intégré à la traverse 58' est installé parallèlement au levier de renvoi 42', et ses extrémités sont liées aux biellettes intermédiaires 40' et 41' par les extrémités de la traverse 58' qui sont articulées sur ces biellettes 40' et 41' par les articulations 61 et 62. L'amortisseur 65' peut être du type à fluide d'amortissement et comporter, comme schématiquement représenté sur la figure 3, deux cylindres 65'a et 65'b solidaires de l'articulation centrale 66', de part et d'autre de cette dernière, et dans chacun desquels coulisse l'un respectivement de deux pistons 65'c et 65'd liés à des tiges d'amortisseur 58'a et 58'b constituées par les parties d'extrémité opposées de la traverse 58'. Mais il est aussi possible que les cylindres 65'a et 65'b soient solidaires chacun de l'une respectivement des parties d'extrémité opposées 58'a et 58'b de la traverse 58' tandis que les pistons 65'c et 65'd sont liés à des tiges solidaires de l'articulation centrale 66'. Il est également possible que chaque étage de l'amortisseur double 65', comme celui 65 de la figure 2, soit d'un autre type, par exemple à au moins une couche de matériau visco-élastique cisaillée entre deux supports rigides liés aux extrémités opposées de l'étage d'amortisseur.

En outre, pour assurer une bonne adaptation dynamique en traînée, chaque amortisseur 65 ou 65' est en fait associé à des moyens élastiques de rappel, tels qu'un ou plusieurs ressorts 68 ou 68', par exemple montés chacun entre un cylindre et un piston d'amortisseur, de manière connue, pour constituer un adaptateur de fréquence ayant une raideur déterminée et ainsi monté entre la manchette 37 et le moyeu, par l'intermédiaire des biellettes 40 et 41 ou 40' et 41' et du mât rotor 31 pour donner à la pale correspondante, de manière connue, une fréquence propre en traînée favorable vis-à-vis des phénomènes de résonance-sol et/ou de résonance de chaîne cinématique. Cet adaptateur de traînée n'est ainsi sollicité que par des mouvements de traînée de la pale et la manchette 37 correspondantes, et reste insensible aux mouvements de pas et de battement de cette pale. Les dispositifs des figures 2 et 3 ont pour avantage d'être fiables et d'une grande longévité, du fait que leurs composants sont peu chargés, tout en garantissant l'introduction de couples de commande purs dans les manchettes rigides en torsion, pour la transmission du pas aux pales, et en assurant un amortissement et une bonne adaptation dynamique en traînée sans couplage avec le pas et les battements.

## Revendications

1. Dispositif de commande de pas pour rotor du type dit "sans articulation", et dans lequel :
- un mât rotor (31) est entraîné en rotation autour d'un axe du rotor (A-A),
- un moyeu (32) est solidaire en rotation du mât (31),
- au moins deux pales sont chacune, d'une part, reliée au moyeu (32) par une partie d'emplanture comprenant au moins un bras (35) torsible autour d'un axe (X-X) longitudinal de changement de pas de la pale, et, d'autre part, munie d'une manchette (37) rigide en torsion, entourant le bras torsible (35), et dont la partie radiale externe, par rapport à l'axe (A-A) du rotor, est solidaire en torsion de la pale et du bras torsible (35) autour de l'axe de pas (X-X), tandis que sa partie radiale interne entoure sans contact le bras torsible (35) et présente deux leviers de pas (38, 39) fixés l'un sur le bord d'attaque et l'autre sur le bord de fuite de la manchette (37), chaque levier de pas (38-39) étant articulé à une extrémité de l'une respectivement de deux biellettes intermédiaires (40', 41') dont les autres extrémités sont articulées à un levier de renvoi (42, 42'), de part et d'autre d'une liaison pivotante (43) du levier de renvoi (42') sur un pivot (44) solidaire en rotation du mât rotor (31), le levier de renvoi (42') étant relié par une articulation (48) décalée par rapport à sa liaison pivotante (43), à une bielle de commande de pas (49) correspondante manoeuvrée sensiblement dans la direction de l'axe (A-A) du rotor par un mécanisme d'actionnement (51') relié aux commandes de vol actionnées par le pilote,
caractérisé en ce que, pour chaque pale, une traverse (58, 58') est disposée entre les deux biellettes intermédiaires (40', 41') et articulée (61, 62) sur chacune desdites biellettes entre les extrémités de chaque biellette, et ladite traverse (58, 58') coopère avec un ensemble comportant au moins un amortisseur (65, 65') de traînée de la pale correspondante, ledit ensemble étant articulé sur un point fixe (67, 67') solidaire en rotation du mât rotor (31).

2. Dispositif de commande de pas selon la revendication 1, caractérisé en ce que, pour chaque pale, la traverse (58) est articulée (63) par son milieu sur ledit ensemble avec amortisseur (65) de traînée, lequel ensemble est articulé (66) par ailleurs sur ledit point fixe (67), solidaire en rotation du mât rotor (31).

3. Dispositif de commande de pas selon la revendication 2, caractérisé en ce que, pour chaque pale, les centres de la liaison pivotante (43) du levier de renvoi (42) sur son pivot (44) et de l'articulation (63) de la traverse (58) sur l'ensemble à amortisseur de traînée (65) sont sensiblement dans un même plan radial, par rapport à l'axe (A-A) du rotor, passant par l'axe de pas (X-X) de la pale correspondante.

4. Dispositif de commande de pas selon la revendication 1, caractérisé en ce que, pour chaque pale, ledit ensemble avec amortisseur de traînée (65') est intégré à la traverse (58'), l'amortisseur (65') étant double, à deux étages symétriques par rapport à un point milieu, correspondant au milieu de la traverse (58'), et aménagé en articulation centrale (66') par laquelle ledit ensemble est articulé sur ledit point fixe (67') solidaire en rotation du mât rotor (31).

5. Dispositif de commande de pas selon la revendication 4, caractérisé en ce que, pour chaque pale, les centres de la liaison pivotante (43) du levier de renvoi (42') sur son pivot (44) et de ladite articulation centrale (66') de l'ensemble à amortisseur double (65') sur ledit point fixe (67') lié au mât rotor (31) sont sensiblement dans un même plan radial, par rapport à l'axe (A-A) du rotor, passant par l'axe de pas (X-X) de la pale correspondante.

6. Dispositif de commande de pas selon la revendication 5, caractérisé en ce que, pour chaque pale, ladite articulation centrale (66') est située sur un axe parallèle à l'axe rotor (A-A) et passant par le centre de la liaison pivotante (43) du levier de renvoi (42') sur son pivot (44).

7. Dispositif de commande de pas selon l'une des revendications 1 à 6, caractérisé en ce que l'amortisseur de traînée (65, 65') est associé à des moyens élastiques de rappel dans ledit ensemble constituant un adaptateur de fréquence, monté entre la manchette (37) correspondante et le moyeu (32) par l'intermédiaire des biellettes intermédiaires (40, 41, 40', 41') et du mât rotor (31).

8. Dispositif de commande de pas selon l'une des revendications 1 à 7, caractérisé en ce que les distances séparant les centres des articulations (40a-61, 41a-62) de chaque biellette intermédiaire (40, 41, 40', 41') sur le levier de pas (38, 39) correspondant et sur la traverse (58, 58') sont égales.

9. Dispositif de commande de pas selon l'une quelconque des revendications 1 à 8, caractérisé en ce que, pour chaque pale, le pivot (44) est relié rigidement au mât rotor (31) par au moins une potence latérale (45), la bielle de commande de pas (49) est articulée (48) sur une extrémité du levier de renvoi (42, 42') sensiblement rectiligne, et les deux leviers de pas (38, 39) sont en saillie l'un vers l'avant et l'autre vers l'arrière de ladite manchette (37) correspondante, et sensiblement de même longueur, ainsi que les deux biellettes intermédiaires (40-41, 40'-41'), sensiblement rectilignes.

## Claims

1. Pitch-control device for rotor of the so-called "hingeless" type, and in which:
- a rotor mast (31) is driven in rotation about an axis (A-A) of the rotor,
- a hub (32) is secured in terms of rotation to the mast (31),
- at least two blades are each, on the one hand, connected to the hub (32) by a root attachment part comprising at least one arm (35) that is twistable about a longitudinal pitch-change axis (X-X) of the blade, and, on the other hand, fitted with a cuff (37) which is rigid in terms of torsion, surrounding the twistable arm (35), and of which the outer radial part, with respect to the axis (A-A) of the rotor, is secured in terms of torsion to the blade and to the aim twistable (35) about the pitch axis (X-X), whereas its inner radial part surrounds the twistable arm (35), without contact, and displays two pitch levers (38, 39) which are fixed, in the case of one of them, to the leading edge and, in the case of the other, to the trailing edge of the cuff (37), each pitch lever (38, 39) being articulated to one end of one, respectively, of two intermediate connecting rods (40', 41'), the other ends of which are articulated to a transmission lever (42, 42'), on either side of a pivoting link (43) by means of which the transmission lever pivots (42') on a pivot (44) which is secured in terms of rotation to the rotor mast (31), the transmission lever (42') being connected by an articulation (48) which is offset with respect to its pivoting link (43) to a corresponding pitch-control rod (49) manoeuvred substantially in the direction of the axis (A-A) of the rotor by an actuating mechanism (51') connected to the flight controls actuated by the pilot, characterized in that, for each blade, a crossmember (58, 58') is located between the two intermediate connecting rods (40, 41') and articulated (61, 62) to each of the said connecting rods between the ends of each connecting rod and the said crossmember (58, 58') interacts with an assembly including at least one damper (65, 65') for damping the drag of the corresponding blade, the said assembly being articulated to a fixed point (67, 67') secured in terms of rotation to the rotor mast (31).

2. Pitch-control device according to Claim 1, characterized in that, for each blade, the crossmember (58) is articulated (63) by its middle to the said assembly with drag damper (65), which assembly is moreover articulated (66) to the said fixed point (67), secured in terms of rotation to the rotor mast (31).

3. Pitch-control device according to Claim 2, characterized in that, for each blade, the centres of the pivoting link (43) by means of which the transmission lever (42) pivots on its pivot (44) and of the articulation (63) by means of which the crossmember (58) is articulated to the assembly with drag damper (65) are substantially in one and the same radial plane, with respect to the axis (A-A) of the rotor, passing through the pitch axis (X-X) of the corresponding blade.

4. Pitch-control device according to Claim 1, characterized in that, for each blade, the said assembly with drag damper (65') is incorporated into the crossmember (58'), the damper (65') being a double damper with two stages which are symmetric with respect to a mid-point corresponding to the middle of the crossmember (58'), and formed as a central articulation (66') via which the said assembly is articulated to the said fixed point (67') secured in terms of rotation to the rotor mast (31).

5. Pitch-control device according to Claim 4, characterized in that, for each blade, the centres of the pivoting link (43) by means of which the transmission lever (42') pivots on its pivot (44) and of the said central articulation (66') by means of which the assembly with double damper (65') is articulated to the said fixed point (67') linked to the rotor mast (31) are substantially in one and the same radial plane, with respect to the axis (A-A) of the rotor, passing through the pitch axis (X-X) of the corresponding blade.

6. Pitch-control device according to Claim 5, characterized in that, for each blade, the said central articulation (66') is situated on an axis parallel to the rotor axis (A-A) and passing through the centre of the pivoting link (43) by means of which the transmission lever (42') pivots on its pivot (44).

7. Pitch-control device according to any one of Claims 1 to 6, characterized in that the drag damper (65, 65') is associated with elastic return means in the said assembly constituting a frequency-matching device, mounted between the corresponding cuff (37) and the hub (32) via the intermediate connecting rods (40, 41, 40', 41') and the rotor mast (31).

8. Pitch-control device according to any one of Claims 1 to 7, characterized in that the distances separating the centres of the articulations (40a-61, 41a-62) by means of which each intermediate connecting rod (40-41, 40', 41') is articulated to the corresponding pitch lever (38, 39) and to the crossmember (58, 58') are equal.

9. Pitch-control device according to any one of Claims 1 to 8, characterized in that, for each blade, the pivot (44) is connected rigidly to the rotor mast (31) by at least one lateral bracket (45), the pitch-control rod (49) is articulated (48) to one end of the substantially straight transmission lever (42, 42'), and the two pitch levers (38, 39) project, one towards the front and the other towards the rear of the said corresponding cuff (37), and are substantially the same length, as are the two intermediate connecting rods (40-41, 40'-41'), which are substantially straight.

## Patentansprüche

1. Blattanstellsteuervorrichtung für gelenklose Rotoren, bei der:
- ein Rotorschaft (31) um eine Rotorachse (A-A) drehangetrieben ist,
- eine Nabe (32) mit dem Schaft (31) drehungsvereint ist,
- wenigstens zwei Blätter jeweils zum einen an die Nabe (32) durch ein Wurzelstück, das wenigstens einen um eine Längsachse (X-X) zur Verstellung der Blattanstellung verwindbaren Arm (35) enthält, angeschlossen und zum anderen mit einer verwindungssteifen Manschette (37) versehen sind, die den verwindbaren Arm (35) umgibt und deren äußerer radialer Teil, in bezug auf die Achse (A-A) des Rotors, mit dem Blatt und dem verwindbaren Arm (35) um die Anstellachse (X-X) verwindungsvereint ist, wogegen ihr innerer radialer Teil berührungslos den verwindbaren Arm (35) umgibt und zwei Anstellhebel (38, 39) aufweist, von denen der eine an der Vorderkante und der andere an der Hinterkante der Manschette (37) befestigt ist, wobei jeder Anstellhebel (38-39) mit einem Ende von jeweils einem von zwei Zwischengliedern (40', 41') gelenkig verbunden ist, deren andere Enden mit einem Umlenkhebel (42, 42') beiderseits einer Schwenkverbindung (43) des Umlenkhebels (42') an einer mit dem Rotorschaft (31) drehungsvereinten Schwenklagerstelle (44) gelenkig verbunden sind, wobei der Umlenkhebel (42') durch ein in bezug auf seine Schwenkverbindung (43) versetztes Gelenk (48) mit einer entsprechenden Anstellsteuerstange (49) verbunden ist, die im wesentlichen in der Richtung der Achse (A-A) des Rotors durch einen Antriebsmechanismus (51') betätigt wird, der an die durch den Piloten veranlaßten Flugbefehle gebunden ist, **dadurch gekennzeichnet**, daß für jedes Blatt eine Traverse (58, 58') zwischen den beiden Zwischengliedern (40', 41') angeordnet und mit jedem dieser Glieder zwischen den Enden jedes Gliedes gelenkig (61, 62) verbunden ist, und die Traverse (58, 58') mit einer Anordnung zusammenwirkt, die wenigstens einen Widerstandsdämpfer (65, 65') des entsprechenden Blattes enthält, wobei diese Anordnung an einem mit dem Rotorschaft (31) drehungsvereinten Festpunkt (67, 67') gelenkig angebracht ist.

2. Anstellsteuervorrichtung nach Anspruch 1, **dadurch gekennzeichnet**, daß für jedes Blatt die Traverse (58) in ihrer Mitte mit der Anordnung mit Widerstandsdämpfer (65) gelenkig (63) verbunden ist, wobei diese Anordnung überdies am mit dem Rotorschaft (31) drehungsvereinten Festpunkt (67) gelenkig (66) angebracht ist.

3. Anstellsteuervorrichtung nach Anspruch 2, **dadurch gekennzeichnet**, daß für jedes Blatt die Mittelpunkte der Schwenkverbindung (43) des Umlenkhebels (42) bei seiner Schwenklagerstelle (44) und des Gelenks (63) der Traverse (58) bei der Anordnung mit Widerstandsdämpfer (65) im wesentlichen in einer gleichen, in bezug auf die Achse (A-A) des Rotors radialen Ebene sind, die durch die Anstellachse (X-X) des entsprechenden Blattes verläuft.

4. Anstellsteuervorrichtung nach Anspruch 1, **dadurch gekenn**zeichnet, daß für jedes Blatt die Anordnung mit Widerstandsdämpfer (65') mit der Traverse (58') integriert ist, wobei der Dämpfer (65') doppelt in zwei symmetrischen Gegentaktstufen in bezug auf einen der Mitte der Traverse (58') entsprechenden Mittenpunkt ausgebildet ist und an einem zentralen Gelenk (66') angebracht ist, durch welches die Anordnung am mit dem Rotorschaft (31) drehungsvereinten Festpunkt (67') gelenkig gelagert ist.

5. Anstellsteuervorrichtung nach Anspruch 4, **dadurch gekennzeichnet**, daß für jedes Blatt die Mittelpunkte der Schwenkverbindung (43) des Umlenkhebels (42') bei seiner Schwenklagerstelle (44) und des zentralen Gelenks (66') der Anordnung mit doppeltem Dämpfer (65') beim mit dem Rotorschaft (31) verbundenen Festpunkt (67') im wesentlichen in einer gleichen, in bezug auf die Achse (A-A) des Rotors radialen Ebene sind, die durch die Anstellachse (X-X) des entsprechenden Blattes verläuft.

6. Anstellsteuervorrichtung nach Anspruch 5, **dadurch gekennzeichnet**, daß für jedes Blatt das zentrale Gelenk (66') auf einer zur Rotorachse (A-A) parallel verlaufenden und durch den Mittelpunkt der Schwenkverbindung (43) des Umlenkhebels (42') bei seiner Schwenklagerstelle (44) verlaufenden Achse liegt.

7. Anstellsteuervorrichtung nach einem der Ansprüche 1 bis 6, **dadurch gekennzeichnet**, daß in der erwähnten Anordnung dem Widerstandsdämpfer (65, 65') elastische Rückstellmittel zugeordnet sind und ein Frequenzanpaßglied bilden, das zwischen der entsprechenden Manschette (37) und der Nabe (32) mit Hilfe der Zwischenglieder (40, 41, 40', 41') und des Rotorschafts (31) angebracht ist.

8. Anstellsteuervorrichtung nach einem der Ansprüche 1 bis 7, **dadurch gekennzeichnet**, daß die Abstände, welche die Mittelpunkte der Gelenke (40a-61, 41a-62) jedes Zwischenglieds (40, 41, 40', 41') beim entsprechenden Anstellhebel (38, 39) und bei der Traverse (58, 58') trennen, gleich sind.

9. Anstellsteuervorrichtung nach einem der Ansprüche 1 bis 8, **dadurch gekennzeichnet**, daß für jedes Blatt die Schwenklagerstelle (44) mit dem Rotorschaft (31) durch wenigstens einen seitlichen Ausleger (45) starr verbunden ist, die Anstellsteuerstange (49) an einem im wesentlichen geradlinigen Ende des Umlenkhebels (42, 42') angelenkt (48) ist, und die beiden Anstellhebel (38, 39) über die entsprechende Manschette (37) vorstehen, und zwar der eine über deren Vorderseite und der andere über deren Rückseite hinaus, und im wesentlichen von gleicher Länge sind so wie die beiden im wesentlichen geradlinigen Zwischenglieder (40-41, 40'-41').
